# EUROPEAN PATENT APPLICATION

(11) **EP 3 351 088 A1**
(43) Date of publication of application: **25.07.2018**
(21) Application number: 16845902.2
(22) Date of filing: 30.08.2016
(51) Int. Cl.: A01G 7/00, A01G 9/24

(54) **PLANT GROWING DEVICE**

(30) Priority: 17.09.2015 JP 2015183714
(71) Applicant: Panasonic Intellectual Property Management Co., Ltd., Osaka-shi, Osaka 540-6207 (JP)
(72) Inventor: OGATA, Satoshi, Osaka-shi, Osaka 540-6207 (JP); OZAWA, Takahisa, Osaka-shi, Osaka 540-6207 (JP); ISHIDOU, Tarou, Osaka-shi, Osaka 540-6207 (JP)
(74) Representative: Müller-Boré & Partner Patentanwälte PartG mbB
(86) International application number: PCT/JP2016/003960
(87) International publication number: WO 2017/047024

(57) **Abstract**

A plant raising apparatus (100): a light source (4) that emits light traveling toward an aboveground part (3a) of a plant (3); a heat insulating portion (5) that has a light transmitting property and that partitions a space at a side of the light source (4) and a space at a side of the aboveground part (3a); and an air blowing mechanism (6) that generates an airflow at a space between the light source (4) and the heat insulating portion (5). Thereby, it is suppressed that the heat of high temperature air staying above the heat insulating portion (5) having a light transmitting property adversely affects the plant (3).

## Description

### TECHNICAL FIELD

The present invention relates to a plant raising apparatus for growing a plant by means of photosynthesis utilizing light emitted from a light source.

### BACKGROUND ART

As disclosed in the following patent literature 1, attempts have been made to adjust the natural heights of plants using a plate-like member having a light transmitting property.

### CITATION LIST

### PATENT LITERATURE

Patent Literature 1: Japanese Unexamined Patent Application Publication No. 2014-100082

### SUMMARY OF INVENTION

### PROBLEM TO BE SOLVED

According to the technique disclosed in the above-mentioned patent literature 1, heat generated by a light source is shielded by the plate-like member having a light transmitting property. Therefore, the heat emitted by the light source is suppressed from reaching the plants directly. However, high temperature air continues to stay in the vicinity of the plate-like member having a light transmitting property. Therefore, the heat of the high temperature air that has stayed reaches the space around the plant gradually. Accordingly, it is impossible to suppress the heat generated by the light source from adversely affecting the plants only by means of shielding the heat generated from the light source with the plate-like member having a light transmitting property.

The present invention has been made in view of such conventional problems. It is an object of the present invention to provide a plant raising apparatus capable of suppressing the heat generated by the light source from adversely affecting the plants.

### SOLUTION TO SOLVE PROBLREM

In order to solve the above-described problem, a plant raising apparatus according to an aspect of the present invention comprises: a light source that emits light traveling toward an aboveground part of a plant; a heat insulating portion that has a light transmitting property and that partitions a space at a side of the light source and a space at a side of the aboveground part; and an air blowing mechanism that generates an airflow at a space between the light source and the heat insulating portion.

### EFFECT OF INVENTION

According to the present invention, it is possible to suppress the heat generated by the light source from adversely affecting the plants.

### BRIEF DESCRIPTION OF DRAWINGS

[Fig. 1] Fig. 1 is a vertical sectional view of a plant raising apparatus according to Embodiment 1 of the present invention.
[Fig. 2] Fig. 2 is a vertical sectional view of a plant raising apparatus according to Embodiment 2 of the present invention.
[Fig. 3] Fig. 3 is a vertical sectional view of a plant raising apparatus according to Embodiment 3 of the present invention.
[Fig. 4] Fig. 4 is a vertical sectional view of a plant raising apparatus according to Embodiment 4 of the present invention.
[Fig. 5] Fig. 5 is a vertical sectional view of a plant raising apparatus according to Embodiment 5 of the present invention.
[Fig. 6] Fig. 6 is a vertical sectional view of a plant raising apparatus according to Embodiment 6 of the present invention.
[Fig. 7] Fig. 7 is a vertical sectional view of a plant raising apparatus according to Embodiment 7 of the present invention.
[Fig. 8] Fig. 8 is a vertical sectional view of a heat insulating portion of a plant raising apparatus according to Embodiment 8 of the present invention.
[Fig. 9] Fig. 9 is a plan view of a heat insulating portion of a plant raising apparatus according to Embodiment 8 of the present invention.
[Fig. 10] Fig. 10 is a vertical sectional view of a heat insulating portion of a plant raising apparatus according to Embodiment 9 of the present invention.
[Fig. 11] Fig. 11 is a plan view of a heat insulating portion of a plant raising apparatus according to Embodiment 9 of the present invention.
[Fig. 12] Fig. 12 is a schematic vertical sectional view of a plant raising apparatus according to Embodiment 10 of the present invention.

### DESCRIPTION OF EMBODIMENTS

Hereinafter, the plant raising apparatuses of the embodiments will be described with reference to the drawings. In the descriptions and the drawings of the embodiments, the same reference numerals are denoted to the same portions. The description of the same portion with the same reference numeral is not repeated in the subsequent embodiments. In the comparison between the drawings of Embodiment 1 and the subsequent embodiments, the same portions denoted by the same reference numerals have the same structure and function unless otherwise specified.

### (Embodiment 1)

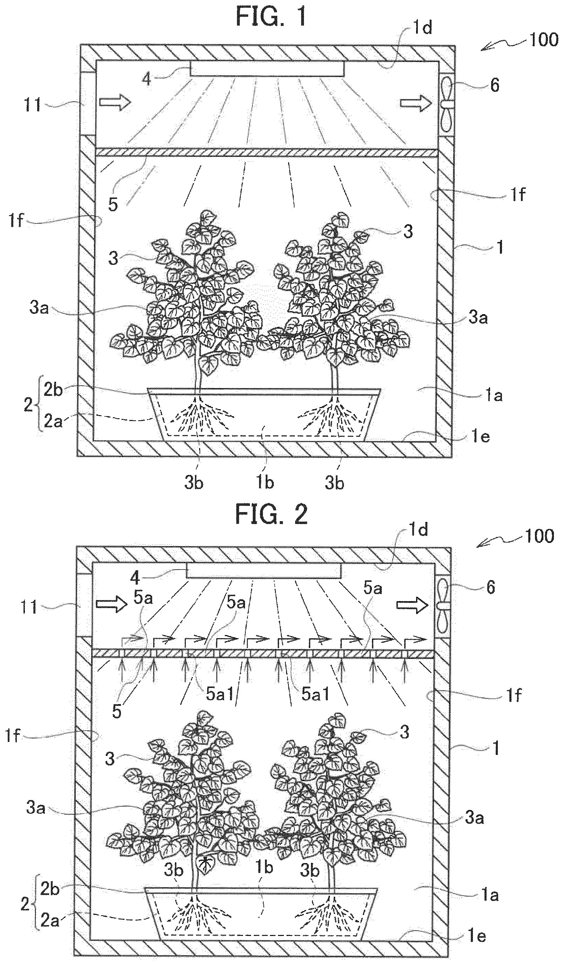

Referring to Fig. 1, the plant raising apparatus 100 of Embodiment 1 will be described.

As shown in Fig. 1, the plant raising apparatus 100 comprises a housing 1. The housing 1 has a rectangular parallelepiped structure consisting of a ceiling portion 1d, a floor portion 1e, and four sidewall portions 1f. The housing 1 blocks light entering from its outside to its inside. A cultivation room underground portion 2 that encloses an underground space 1b in which underground parts 3b of plants 3 grow is comprised in the housing 1. The housing 1 encloses an aboveground space 1a in which aboveground parts 3a of the plants 3 grow, including the cultivation room underground portion 2.

The cultivation room underground portion 2 includes a cultivation tank 2a and a partition portion 2b. The cultivation tank 2a contains water or a nutrient solution (not shown) to be supplied to the underground parts 3b such as the roots or the like of the plants 3. The partition portion 2b constitutes a lid of the cultivation tank 2a and partitions the aboveground space 1a where the aboveground parts 3a of the plants 3 grow and the underground space 1b where the underground parts 3b of the plants 3 grow. The stems of the plants 3 penetrate the through holes provided in the partition portion 2b. Flexible members such as sponges or the like are fitted in the gaps between the stems of the plants 3 and the through holes.

The plant raising apparatus 100 is provided with a light source 4 which is fixed to the lower surface of the ceiling portion 1d of the housing 1 positioned above the aboveground parts 3a and emits light towards the aboveground parts 3a. In the housing 1, a heat insulating portion 5 having a light transmitting property is provided between the aboveground portion 3a and the light source 4 so as to partition the space at the side of the light source 4 and the space at the side of the aboveground portions 3a. The heat insulating portion 5 is a light transmitting plate member such as what is called an acrylic plate or the like. The plant raising apparatus 100 is provided with an air blowing mechanism 6 that generates an airflow in the space between the light source 4 and the heat insulating portion 5. The air blowing mechanism 6 is installed on one sidewall 1f. A ventilation opening 11 is provided on another sidewall portion 1f opposed to the one sidewall portion 1f of the housing 1 on which the air blowing mechanism 6 is installed.

According to the plant raising apparatus 100 of the present embodiment, the heat insulating portion 5 having a light transmitting property is provided in the path of light from the light source 4 to the aboveground parts 3a. The heat insulating portion 5 allows the light emitted from the light source 4 to reach the aboveground parts 3a but prevents high temperature air from reaching the aboveground parts 3a. Although the heat insulating portion 5 of the present embodiment is formed with a plate-like member, the heat insulating portion 5 may have any shape.

Further, by means of the airflow generated by the air blowing mechanism 6, the air in the outside of the housing 1 is introduced from the ventilation opening 11 into the interior of the housing 1, and the high temperature air staying above the heat insulating portion 5 having a light transmitting property is discharged to the outside of the housing 1. Therefore, it is suppressed that the heat of the high temperature air staying above the heat insulating portion 5 having a light transmitting property adversely affects the plants 3.

### (Embodiment 2)

Referring to Fig. 2, the plant raising apparatus 100 according to Embodiment 2 will be described.

The heat insulating portion 5 of the present embodiment includes a heat insulating plate portion 5a having one or more through holes 5a1. The heat insulating plate portion 5a is a plate-like member extending along a horizontal plane. In the plant raising apparatus 100 of the present embodiment as well, the air blowing mechanism 6 generates an airflow between the light source 4 and the heat insulating plate portion 5a. At this time, the generated airflow passes through the through holes 5a1. As the airflow passing through the through holes 5a1, the following two kinds of airflows are conceivable in accordance with the sizes and shapes of the one or more through holes 5a1 as well as the structure of the heat insulating portion 5 and the peripheral structure thereof.

As indicated by arrows in Fig. 2, the first airflow is one that is directed from the space on the side of the aboveground parts 3a of the heat insulating plate portion 5a to the space on the side of the light source 4 of the head insulating portion 5 through the one or more through holes 5a1. In this case, the water vapor in the space between the aboveground parts 3a and the heat insulating portion 5 moves to the space between the light source 4 and the heat insulating portion 5 through the one or more through holes 5a1. Therefore, it is possible to prevent water drops from being generated on the lower surface of the heat insulating portion 5. Accordingly, it is possible to prevent the occurrence of fungi, bacteria or the like on the lower surface of the heat insulating portion 5.

Although not shown in Fig. 2, the second airflow is one that is directed from the space on the side of the light source 4 of the heat insulating plate portion 5a to the space on the side of the aboveground parts 3a of the heat insulating plate portion 5a through the one or more through holes 5a1. In this case, the airflow is blown out from the one or more through holes 5a1 toward the water vapor in the space between the aboveground parts 3a of the plants 3 and the heat insulating plate portion 5a. Thereby, it is possible to prevent water drops from being generated on the lower surface of the heat insulating plate portion 5a. Therefore, as in the case where the first airflow is generated, it is possible to prevent the occurrence of fungi, bacteria, or the like on the lower surface of the heat insulating plate portion 5a in the case where the second airflow is generated as well.

### (Embodiment 3)

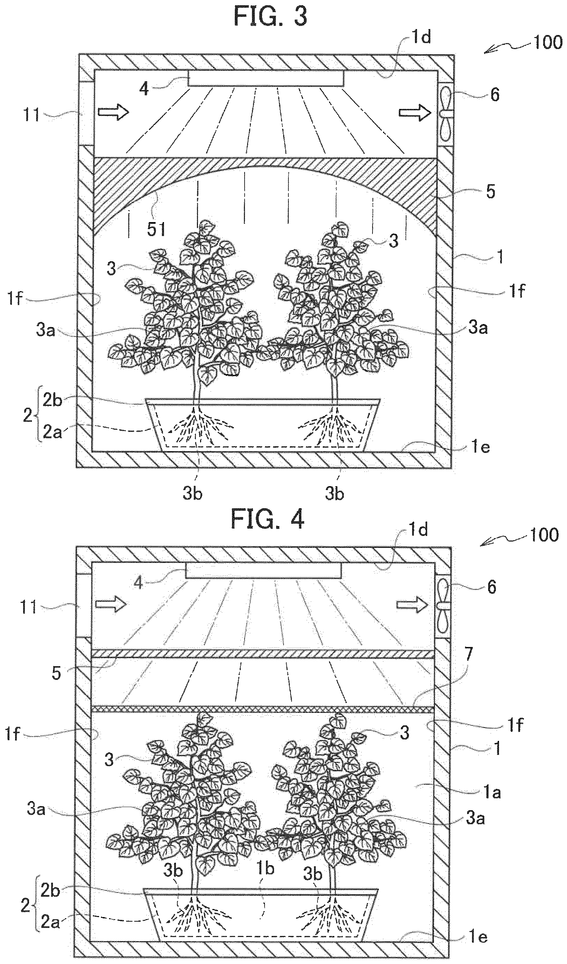

Referring to Fig. 3, the plant raising apparatus 100 according to Embodiment 3 will be described.

In the plant raising apparatus 100 of the present embodiment, the lower surface 51 of the heat insulating portion 5 is inclined with respect to a horizontal plane. Specifically, the lower surface 51 of the heat insulating portion 5 is formed as a concave-like curved surface. However, the lower surface 51 of the heat insulating portion 5 may be constituted by a single inclined plane or the combination of a plurality of inclined planes. In this way, if the lower surface 51 of the heat insulating portion 5 is inclined with respect to the horizontal plane, water drops adhering to the lower surface of the heat insulating portion 5 flow to the lowest position along the shape of the lower surface 51 of the heat insulating portion 5, and fall downward from the position. As a result, it is possible to suppress the water vapor emitted by the plants 3 from continuing to adhere to the lower surface 51 of the heat insulating portion 5 as water drops. Accordingly, it is possible to prevent the occurrence of fungi, bacteria, or the like caused by water drops adhering to the lower surface 51 of the heat insulating portion 5.

In addition, the heat insulating portion 5 may have the shape of at least one of a concave-like curved surface and a convex-like curved surface such as a lens so as to concentrate the light emitted from the light source 4 or disperse the light emitted from the light source 4. In this way, the light passing through the heat insulating portion 5 can be dispersed or concentrated based on the shape of the heat insulating portion 5. Thereby, the aboveground parts 3a can be irradiated with light according to types and states of the plants 3 or the like.

### (Embodiment 4)

Referring to Fig. 4, the plant raising apparatus 100 according to Embodiment 4 will be described.

The plant raising apparatus 100 of the present embodiment further includes a sieving member 7 that is provided at a distance from the heat insulating portion 5 between the aboveground parts 3a and the heat insulating portion 5 and that has a large number of through holes or openings. The sieving member 7 allows water vapor and light to pass therethrough, but restricts the passage of the aboveground parts 3a. According to the sieving member 7, the aboveground parts 3a do not reach the heat insulating portion 5, but the water vapor rises toward the heat insulating portion 5. Thereby, it is possible to separate the space in which the water vapor stays and the space in which the aboveground parts 3a exist. As a result, it is possible to prevent the occurrence of physiological disorder of the aboveground parts 3a and the occurrence of fungi or the like, which are caused by the water vapor staying around the aboveground parts 3a.

The sieving member 7 is constituted by a net-like member, a lattice-like member, a perforated member, or the like. From the viewpoint of not hindering the arrival of light from the light source 4 to the aboveground parts 3a, it is preferable that the net-like member, the lattice-like member, the perforated member is made of a light transmitting member or the like.

### (Embodiment 5)

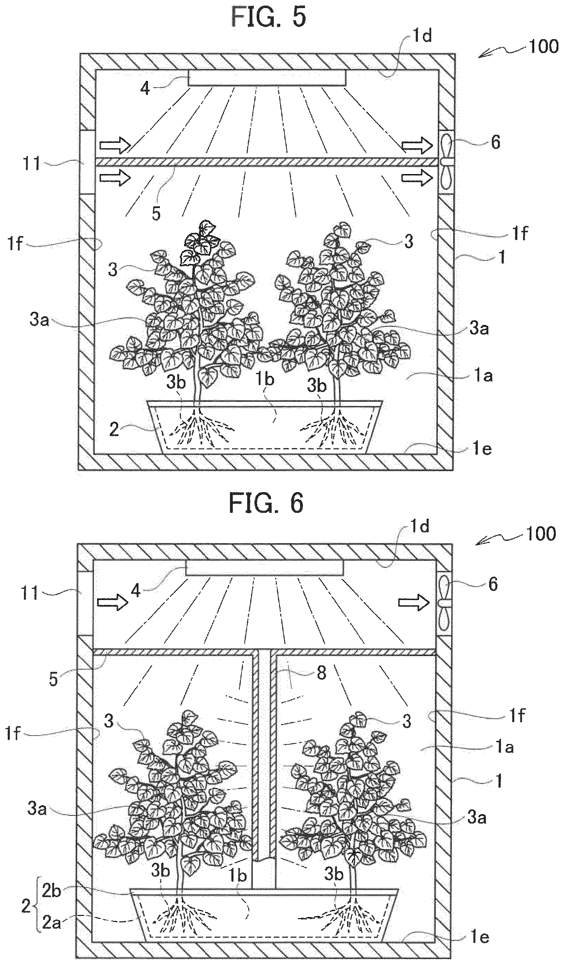

Referring to Fig. 5, the plant raising apparatus 100 according to Embodiment 5 will be described.

In the plant raising apparatus 100 of the present embodiment, the arrangement of the air blowing mechanism 6 and the heat insulating portion 5 is different. The air blowing mechanism 6 is arranged on a line extended in a horizontal direction from the heat insulating portion 5 so as to generate an airflow not only in the space between the light source 4 and the heat insulating portion 5 but also in the space between the heat insulating portion 5 and the aboveground parts 3a.

According to the above-described configuration, the water vapor generated in the aboveground parts 3a is suppressed from reaching the lower surface of the heat insulating portion 5 by the airflow generated in the space between the heat insulating portion 5 and the aboveground parts 3a. Thereby, it is possible to reduce a risk that water drops are generated on the lower surface of the heat insulating portion 5. Therefore, the occurrence of fungi, bacteria, or the like on the lower surface of the heat insulating portion 5 can be suppressed.

In Fig. 5, the air blowing mechanism 6 has one blower fan that generates airflows in both the space between the light source 4 and the heat insulating portion 5 and the space between the heat insulating portion 5 and the plants 3. However, the air blowing mechanism 6 may have two blowing fans. The two blowing fans, respectively, may generate airflows in the space between the light source 4 and the heat insulating portion 5 and the space between the heat insulating portion 5 and the aboveground parts 3a.

### (Embodiment 6)

Referring to Fig. 6, the plant raising apparatus 100 according to Embodiment 6 will be described.

The plant raising apparatus 100 of the present embodiment is provided with a light guide path 8 as a tubular member extending downward from the heat insulating portion 5 at the lateral position of the aboveground parts 3a. The light guide path 8 guides the light emitted from the light source 4 so that the light emitted from the light source 4 is irradiated from the lateral position of the aboveground parts 3a to the aboveground parts 3a. According to this, not only the leaves on the upper side of the aboveground parts 3a but also the leaves on the lower side of the aboveground parts 3a can be irradiated with the light emitted from the light source 4. Therefore, the amount of photosynthesis of the plants 3 can be increased.

Like the heat insulating portion 5, the light guide path 8 may be an acrylic pipe having a light transmitting property and a heat insulating property.

### (Embodiment 7)

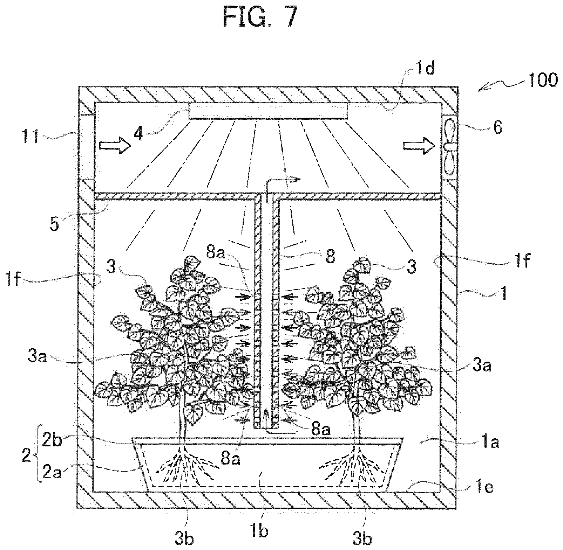

Referring to Fig. 7, the plant raising apparatus 100 according to Embodiment 7 will be described.

In the plant raising apparatus 100 according to the present embodiment, the light guide path 8 has one or more ventilation holes 8a that communicates the space inside the light guide path 8 and the space at the lateral position of the aboveground parts 3a. Therefore, by driving the air blowing mechanism 6, it is possible to generate an airflow flowing from the lateral position of the aboveground parts 3a to the aboveground parts 3a through the one or more ventilation holes 8a. Thereby, the plants 3 can be grown in a state similar to the natural environment. The light guide path 8 may be replaced by a pipe that does not function as a light guide path.

The direction of the airflow passing through the ventilation holes 8a is different depending on the structure of the light guide path 8 and the ventilation holes 8a. The first case, as indicated by the arrows depicted in Fig. 7, is one that generates an airflow directed from the space where the aboveground parts 3a grows through the one or more ventilation holes 8a to the space inside the light guide path 8. The second case, although not shown in Fig. 7, is one that generates an airflow directed from the space inside the light guide path 8 through the one or more ventilation holes 8a to the space where the aboveground parts 3a grows. In either case, it is possible to send wind to the plants 3. Therefore, it is possible to grow the plants 3 in a state similar to the natural environment.

### (Embodiment 8)

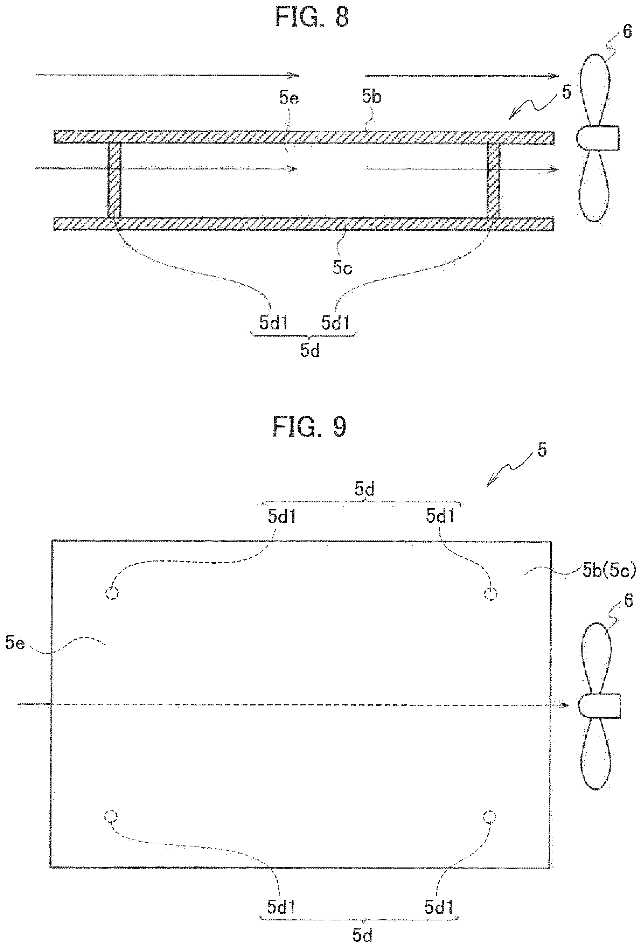

Referring to Figs. 8 and 9, the plant raising apparatus 100 according to Embodiment 8 will be described.

The heat insulating portion 5 includes a first heat insulating plate portion 5b, a second heat insulating plate portion 5c provided at a distance from the first heat insulating plate portion 5b, and a fixing portion 5d that fixes the first heat insulating plate portion 5b and the second heat insulating plate portion 5c. By using the two heat insulating plate portions 5a,5b in this manner, the heat insulating effect of the heat insulating portion 5 can be enhanced as compared with the case of using one heat insulating plate portion.

Further, in the present embodiment, the fixing portion 5d of the plant raising apparatus 100 according to Embodiment 8 is four interval maintaining portions 5d1 that maintains the interval between the first heat insulating plate portion 5b and the second heat insulating plate portion 5c. Accordingly, an open space 5e is formed between the first heat insulating plate portion 5b and the second heat insulating plate portion 5c. Note that the number of the interval maintaining portions 5d1 is not particularly limited.

In this embodiment, as shown by the arrows in Figs. 8 and 9, the fixing portion 5d and the air blowing mechanism 6 are arranged so as to generate an airflow in the open space 5e in addition to the space between the light source 4 and the heat insulating portion 5. Therefore, high temperature air can be suppressed from staying between the first heat insulating plate portion 5b and the second heat insulating plate portion 5c. As a result, it is possible to suppress the heat of the high temperature air staying between the first heat insulating plate portion 5b and the second heat insulating plate portion 5c from being transferred to the aboveground portion 3a.

### (Embodiment 9)

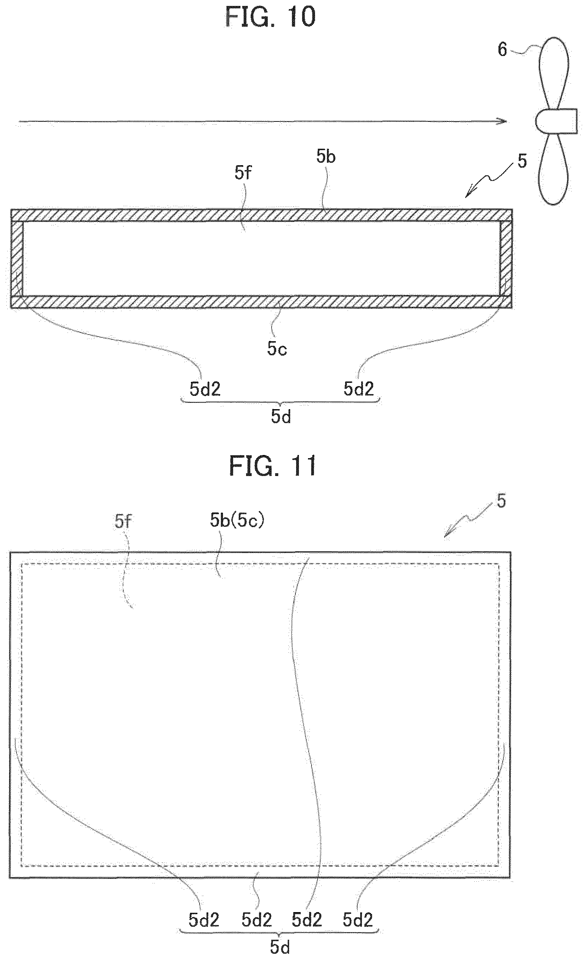

Referring to Figs. 10 and 11, the plant raising apparatus 100 according to Embodiment 10 will be described.

In the present embodiment, the fixing portion 5d of the plant raising apparatus 100 of Embodiment 8 includes four wall portions 5d2. The four wall portions 5d2 are integrally formed with the first heat insulating plate portion 5b and the second heat insulating plate portion 5c, respectively, and forms one airtight space 5f between the first heat insulating plate portion 5b and the second heat insulating plate portion 5c. According to this, based on the same principle as a double glazing, it is possible to enhance the heat insulating effect of the heat insulating portion 5.

Although the fixing portion 5d of the present embodiment constitutes a frame-like wall portion enclosing one airtight space, it may constitute an annular wall portion surrounding the one airtight space. In the present embodiment, the one airtight space 5f is formed by the four wall portions 5d2, but by using multiple wall portions 5d2, it is also possible to form a plurality of airtight spaces 5f between the first heat insulating plate portion 5b and the second heat insulating plate portion 5c. In short, the fixing portion 5d may has any structure so long as it forms one or more airtight spaces. For example, the fixing portion 5d may constitute a wall portion of a grid structure or a wall portion of a honeycomb structure, each of which surrounds a plurality of airtight spaces.

From the viewpoint of obtaining higher heat insulating properties, it is preferable that the airtight space 5f is in a vacuum state, in a high vacuum state similar to a vacuum state, or in a state in which an inert gas such as argon is sealed.

### (Embodiment 10)

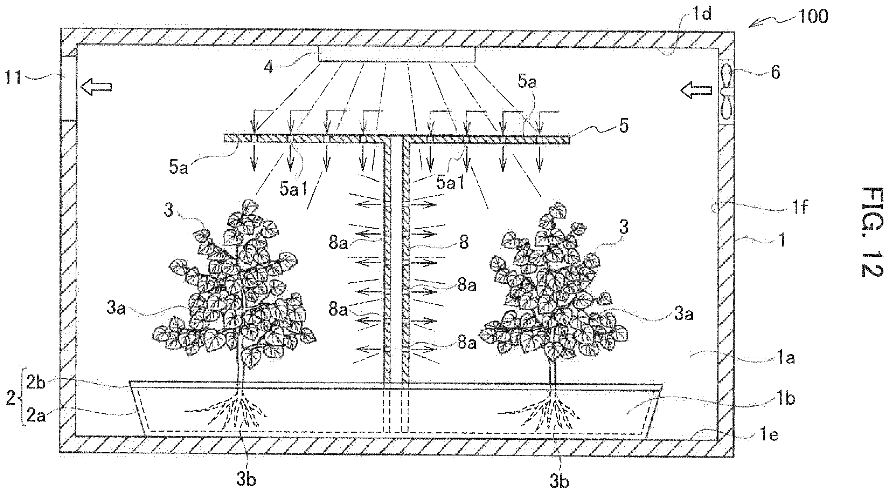

Referring to Fig. 12, the plant raising apparatus 100 according to Embodiment 10 will be described.

Depending on a type of the light source 4, for example, one case where the temperature of the air between the light source 4 and the heat insulating portion 5 is approximately 30 ° C. to 40 ° C., which is relatively low, is conceivable, and another case where the temperature is approximately 70 ° C. to 80 ° C., which is relatively high, is also conceivable.

If the temperature of the air staying above the heat insulating portion 5 having a light transmitting property is approximately 30 ° C. to 40 ° C., which is relatively low, even if such a relatively low temperature airflow is dispersed in the housing 1, serious problem does not occur. Therefore, as indicated by the outline arrow in Fig. 12, the air blowing mechanism 6 may be installed so as to introduce outside air into the inside of the housing 1. In this case, as indicated by the arrows in Fig. 12, airflows may be blown toward the plants 3 from the through holes 5a1 of the heat insulating portion 5 and the ventilation holes 8a of the light guide path 8.

On the other hand, in a case where the temperature of the air staying above the heat insulating portion 5 having a light transmitting property is a relatively high temperature of approximately 70 ° C. to 80 ° C., such a relatively high temperature airflow is in contact with the aboveground parts 3a of the plants 3, there is a risk of adversely affecting the plants 3. Accordingly, in this case, as shown in Figs. 1 to 7, the air blowing mechanism 6 is preferably configured to discharge the high temperature air to the outside of the housing 1.

### (Others)

The plant raising apparatus 100 of each of the above embodiments is a hydroponic cultivating apparatus that cultivates the plants 3 immersing the roots as the underground parts 3b in the water or nutrient solution contained in the cultivation tank 2a. As the plant to be cultivated, for example, a potato (a Irish potato) or a ginseng (an Asiatic ginseng) different from the shapes of the plants depicted in the drawings is assumed. Incidentally, the plants 3 may be replaced with any kind of plant. In addition, the cultivation method of the plants 3 is not limited to a hydroponic culture method, and any method may be used.

The characteristic configurations of the plant raising apparatuses 100 of the embodiments and the effects obtained thereby will be explained below.
(1) The plant raising apparatus 100 comprises the light source 4 that emits light traveling toward the aboveground part 3a of the plant 3, the heat insulating portion 5 that has a light transmitting property and that partitions the space at the side of the light source 4 and the space at the side of the aboveground part 3a, and the air blowing mechanism 6 that generates an airflow in the space between the light source 4 and the heat insulating portion 5.
   According to the above-described configuration, it is suppressed that the heat of high temperature air staying above the heat insulating portion 5 having a light transmitting property adversely affects the plant 3.
(2) The heat insulating portion 5 may be the heat insulating plate portion 5a having one or more through holes 5a1. According to this configuration, it is possible to prevent water drops from being generated on the lower surface of the heat insulating portion 5 by the airflow passing through the through holes 5a1. Therefore, it is possible to prevent the occurrence of fungi, bacteria, or the like on the lower surface of the heat insulating portion 5.
(3) It is preferable that the lower surface of the heat insulating portion 5 be inclined with respect to a horizontal plane. According to this, water drops adhering to the lower surface of the heat insulating portion 5 flow along the lower surface and fall downward from the heat insulating portion 5. Therefore, it is possible to prevent the occurrence of fungi, bacteria, or the like, each of which is caused by water drops generated for the reason that water vapor discharged from the plant 3 has adhered to the lower surface of the heat insulating portion 5.
(4) The plant raising apparatus 100 may further comprise the sieving member 7 provided between the aboveground part 3a and the heat insulating portion 5 at a distance from the heat insulating portion 5, and that allows water vapor and light to pass therethrough, but restricts the passage of the aboveground part 3a.
   According to the above-described sieving member 7, the aboveground part 3a does not reach the heat insulating porition 5, but the water vapor rises toward the heat insulating portion 5. Thereby, it is possible to separate the space in which the water vapor stays and the space in which the aboveground part 3a exists. As a result, it is possible to prevent the occurrence of physiological disorders of the aboveground parts 3a and the occurrence of fungi or the like, each of which is caused by water vapor staying around the aboveground part 3a.
(5) The air blowing mechanism 6 and the heat insulating portion 5 may be arranged so that the air blowing mechanism 6 generates an airflow in the space between the heat insulating porition 5 and the aboveground part 3a in addition to the space between the light source 4 and the heat insulating portion 5.
   According to the above-described configuration, the airflow generated in the space between the heat insulating portion 5 and the aboveground part 3a prevents water vapor discharged from the aboveground part 3a from reaching the lower surface of the heat insulating part 5. Thereby, it is possible to reduce a risk that water drops are generated on the lower surface of the heat insulating portion 5. Therefore, the occurrence of fungi, bacteria or the like on the lower surface of the heat insulating portion 5 can be suppressed.
(6) The plant raising apparatus 100 may further comprises the light guide path 8 that is a tubular member extending downward from the heat insulating portion 5 at the lateral position of the aboveground part 3a and that guides the light emitted from the light source 4 so that the light emitted from the light source 4 is irradiated from the lateral position of the aboveground part 3a to the aboveground part 3a.
   According to the above-described configuration, not only the upper leaves of the aboveground part 3a but also the lower leaves of the aboveground part 3a can be irradiated with the light emitted from the light source 4. Therefore, the amount of photosynthesis of the plant 3 can be increased.
(7) The light guide path 8 may have the one or more ventilation holes 8a that communicate the space inside the light guide path 8 with the space at the lateral position of the aboveground part 3a. According to this, it is possible to send wind from the lateral position of the aboveground part 3a to the aboveground part 3a through the one or more ventilation holes 8a.
(8) The heat insulating portion 5 includes the first heat insulating plate portion 5b, the second heat insulating plate portion 5c provided at a distance from the first heat insulating plate portion 5b, and the fixing portion 5d that fixes the first heat insulating plate portion 5b and the second heat insulating plate portion 5c. According to this configuration, since the two heat insulating plate portions 5a,5b are used, the heat insulating effect of the heat insulating portion 5 can be enhanced as compared with the case of using one heat insulating plate portion.
(9) The fixing portion 5d may be the one or more interval maintaining portions 5d1 that maintain the interval between the first heat insulating plate portion 5b and the second heat insulating plate portion 5c so that the open space 5e is formed between the first heat insulating plate portion 5b and the second heat insulating plate portion 5c. In this case, the heat insulating portion 5 and the air blowing mechanism 6 are preferably arranged so that an airflow is generated in the open space 5e in addition to the space between the light source 4 and the heat insulating portion 5.
   According to the above-described configuration, it is possible to suppress high temperature air from staying between the first heat insulating plate portion 5b and the second heat insulating plate portion 5c. Therefore, it is possible to suppress the heat of the high temperature air staying between the first heat insulating plate portion 5b and the second heat insulating plate portion 5c from reaching the aboveground part 3a.
(10) The fixing portion 5d may include the wall portion 5d2 that forms the one or more airtight spaces 5f between the first heat insulating plate portion 5b and the second heat insulating plate portion 5c. According to this, the heat insulating effect of the heat insulating portion 5 can be enhanced based on the same principle as a double glazing.

This application claims the benefit of priority based on Japanese Patent Application No. 2015-183714 filed on September 17, 2015, the entire contents of which are incorporated herein by reference.

### REFERENCE SIGNS LIST

- 3: plant
- 3a: aboveground part
- 4: light source
- 5: heat insulating portion
- 5a: heat insulating plate portion
- 5al: through hole
- 5b: first heat insulating plate portion
- 5c: second heat insulating plate portion
- 5d: fixing portion
- 5d1: interval maintaining portion
- 5d2: wall portion
- 5e: open space
- 5f: airtight space
- 6: air blowing mechanism
- 7: sieving member
- 8: light guide path
- 8a: ventilation hole
- 51: lower surface
- 100: plant raising apparatus

## Claims

1. A plant raising apparatus:
a light source that emits light traveling toward an aboveground part of a plant;
a heat insulating portion that has a light transmitting property and that partitions a space at a side of the light source and a space at a side of the aboveground part; and
an air blowing mechanism that generates an airflow at a space between the light source and the heat insulating portion.

2. The plant raising apparatus according to claim 1, wherein the heat insulating portion includes a heat insulating plate portion having one or more through holes.

3. The plant raising apparatus according to claim 1 or 2, wherein a lower surface of the heat insulating portion is inclined with respect to a horizontal plane.

4. The plant raising apparatus according to any one of claims 1 to 3, further comprising:
a sieving member that is provided between the aboveground part and the heat insulating portion at a distance from the heat insulating portion and that allows water vapor and light to pass therethrough but restricts a passage of the aboveground part.

5. The plant raising apparatus according to any one of claims 1 to 4, wherein
the air blowing mechanism and the heat insulating portion are arranged so that the air blowing mechanism generates an airflow in a space between the heat insulating portion and the aboveground part in addition to the space between the light source and the heat insulating portion.

6. The plant raising apparatus according to any one of claims 1 to 5, further comprising:
a light guide path that is a tubular member extending downward from the heat insulating portion at a lateral position of the aboveground part and that guides the light emitted from the light source so that the light emitted from the light source is irradiated from the lateral position of the aboveground part to the aboveground part.

7. The plant raising apparatus according to claim 6, wherein the light guide path has one or more ventilation holes that communicate a space inside the light guide path with a space at the lateral position of the aboveground part.

8. The plant raising apparatus according to any one of claims 1 to 7, wherein the heat insulating portion includes:
a first heat insulating plate portion;
a second heat insulating plate portion provided at a distance from the first heat insulating plate portion; and
a fixing portion that fixes the first heat insulating plate portion and the second heat insulating plate portion.

9. The plant raising apparatus according to claim 8, wherein the fixing portion is one or more interval maintaining portions that maintain an interval between the first heat insulating plate portion and the second heat insulating plate portion so that an open space is formed between the first heat insulating plate portion and the second heat insulating plate portion, and
the heat insulating portion and the air blowing mechanism are arranged so that an airflow is generated in the open space in addition to the space between the light source and the heat insulating portion.

10. The plant raising apparatus according to claim 8, wherein the fixing portion includes a wall portion that forms one or more airtight spaces between the first heat insulating plate portion and the second heat insulating plate portion.
